# EUROPEAN PATENT SPECIFICATION

(11) **EP 1 962 996 B1**
(45) Date of publication and mention of the grant of the patent: **25.12.2013**
(21) Application number: 06830143.1
(22) Date of filing: 27.11.2006
(51) Int. Cl.: B01J 3/00, B01J 8/00, C08F 6/26, C08F 10/00, B01J 8/18, B01J 8/38, C08F 210/06

(54) **GAS-PHASE PROCESS AND APPARATUS FOR THE POLYMERIZATION OF OLEFINS**
VERFAHREN UND VORRICHTUNG ZUR GASPHASENPOLYMERISATION VON OLEFINEN
PROCEDE EN PHASE GAZEUSE ET DISPOSITIF POUR LA POLYMERISATION D'OLEFINES

(30) Priority: 23.12.2005 EP 05112964
(43) Date of publication of application: 03.09.2008
(73) Proprietor: Basell Poliolefine Italia S.r.l., 20127 Milano (IT)
(72) Inventor: PENZO, Giuseppe, I-46047 Mantova (IT); RINALDI, Roberto, I-46100 Mantova (IT)
(74) Representative: Sacco, Marco
(86) International application number: PCT/EP2006/068935
(87) International publication number: WO 2007/071527

(56) References cited:
- EP-A- 0 245 043
- EP-A2- 0 250 169
- EP-B1- 0 088 655
- EP-B1- 0 202 076
- EP-B1- 0 782 587
- EP-B1- 1 012 195
- EP-B1- 1 159 305
- GB-A- 1 375 741

## Description

The present invention relates to a process and apparatus for the gas-phase polymerization of α-olefins carried out in the presence of a polymerization catalyst system. In particular, the invention relates to gas-phase polymerization in a continuously operated fluidized bed reactor provided with equipment for the continuous discharge of polymer powder.

The development of catalysts with high activity and selectivity of the Ziegler-Natta type and, more recently, of the metallocene type has led to the widespread use on an industrial scale of processes in which the olefm polymerization is carried out in a gaseous medium in the presence of a solid catalyst. An example of said gas-phase polymerization processes involves the use of a fluidized bed reactor wherein a bed of polymer particles is maintained in a fluidized state by the upward flow of a fluidizing gas.

During the polymerization fresh polymer is generated by catalytic polymerization of the monomers and the manufactured polymer is drawn off from the reactor to maintain the polymer bed at a constant volume. The fluidized bed, which comprises a bed of growing polymer particles and catalyst particles, is maintained in a fluidization state by the continuous upward flow of a fluidizing gas, which comprises the recycled gas stream and make-up monomers. Industrial processes employ a distribution plate to dispense the fluidizing gas to the polymer bed, the distribution plate acting also as a support for the bed when the supply of gas is cut off. The fluidizing gas enters the bottom of the reactor and is passed through the distribution plate to the fluidized polymer bed.

The polymerization of olefins is an exothermic reaction and it is therefore necessary to provide means to cool the bed to remove the heat of polymerization. In the absence of such cooling the bed would increase in temperature until, for example, the catalyst turns inactive or the polymer particles are partially fused. When polymerizing in a fluidized bed reactor, the preferred method for removing the heat of polymerization is by feeding to the reactor a recycle gas stream at a temperature lower than the desired polymerization temperature. Such a recycle stream, while passing through the fluidized bed, allows conducting away the heat of polymerization. The recycle gas stream is withdrawn from the upper zone of the fluidized bed reactor, cooled by passage through an external heat exchanger and then recycled to the reactor. The temperature of the recycle gas stream can be adjusted in the heat exchanger to maintain the fluidized bed at the desired polymerization temperature. The recycle gas stream generally comprises, besides the gaseous monomers, also inert and diluent gases, such as propane or higher saturated hydrocarbons and/or nitrogen, and eventually gaseous chain transfer agents, such as hydrogen. Monomers and chain transfer agents, consumed by the polymerization reaction, are normally replaced by adding make-up gas to the recycle gas stream.

It is known that the discharge of polymer powder from a fluidized bed reactor may be carried out discontinuously or continuously. Bearing in mind the high pressures adopted in the gas-phase polymerization, the conventional discontinuous systems of unloading solids generally comprise at least one intermediate reservoir connected upstream to the reactor and downstream to a holding reservoir by means of pipes, each of which is equipped with a valve. These valves operate in sequence, so that the unloading system operates like a lock. A fraction of the formed polymer together with the reaction gas are first discharged into the intermediate reservoir, and then into the holding reservoir. Correct operation of the intermediate reservoir generally requires the use of a pressure-equalizing system placing the intermediate reservoir in communication with the top of the reactor. An unloading system of this type is described in GB patent 1375741.

Various versions or modifications of the lock principle are described or mentioned in some European patents. For instance, EP-88655 and EP-202076 disclose a high speed evacuation system of the fluidized bed, for example when changing the type of polymer produced in the reactor, which comprises a vertical evacuation pipe, which is centrally connected to a fluidization grid, said vertical evacuation pipe being provided with a high speed on/off valve. These discharge systems are described as an auxiliary system complementary to the traditional discharge systems based on a lateral pipe placed above the fluidization grid. European Patent Application EP 250169 describes a system comprising two rotating plug valves, which are driven in such a way that they are never both open simultaneously. A depressurization tank is connected to the fluidized bed reactor and is interposed between said two rotating plug valves in order to reduce the pressure fluctuations inside the fluidized bed reactor, arising as a result of the discontinuous discharge of polymer powder from the reactor.

All these unloading systems operate discontinuously and require the use of valves which open in sequence. This discontinuous method of operation is often the cause of fluctuations in pressure and/or flow rate, or fluctuations in the level of the fluidized bed inside the reactor, when a batch of manufactured polymer is withdrawn from the reactor. These fluctuations influence the monomer concentration and also other parameters, such as the concentration of chain transfer agents and co-monomers, which all taken together have a strong impact on the quality of the polymer product. Furthermore, the disruptions caused by the above fluctuations have a negative effect on the operation of the equipments placed downstream the polymerization reactor, causing for instance wide variations of pressure at the outlet of the discharge valve, thus requiring great volumes downstream the discharge valve in order to reduce any pressure oscillation. The discontinuous discharge system is also rather expensive as an investment, and also burdensome in maintenance costs. These drawbacks make the above discontinuous systems not the best option to be used in modem industrial processes for the olefin polymerization.

A fluidized bed reactor can better work in a steady and reliable way only if the discharge of polymer powder is operated and adjusted in a continuous way. In fact, even minimal fluctuations on the operating conditions (temperature, pressure, monomers concentration) can considerably increase or decrease the production rate of polymer.

The currently adopted solution is represented by a continuous discharge of polymer through a discharge valve placed in the bottom region of the fluidized bed of polymer. In particular, the manufactured polymer in a powder form is generally drawn off from the reactor by at least one side discharge conduit situated along the vertical wall of the reactor above the fluidization grid, and is then subjected to a decompression and degassing stage. Segmental ball valves or eccentric rotary type valves are commonly used as control valves at the outlet from a fluidized bed polymerization reactor. This type of discharge system gives the advantage of not creating stagnant zones and consequent local hot spots in the region of the fluidized bed nearer to the outlet from the reactor. By maintaining a sufficiently low pressure downstream the discharge valve, the polymerization reaction practically ceases due to the low partial pressure of the monomer, thus avoiding risk of polymerization in the receiving apparatus downstream.

According to the disclosure of EP 1159305 free-flowing polymer powder is continuously withdrawn from a fluidized bed reactor via a discharge pipe, while simultaneously monitoring the surface level of the fluidized bed within the gas-phase reactor. The flow of polymeric material through the discharge pipe is controlled, so as to maintain an essentially constant bed level into the reactor. To achieve this aim, the reactor is provided with an outlet nozzle equipped with a continuously operated control valve for the polymer discharge. The discharge system of EP 1159305 comprises an outlet nozzle from the fluidized polymer bed, a collecting vessel in communication with said outlet nozzle for separating gas from the solid material, a control valve and a bed level indicator. Ball valves, V-ball valves and hose valves are mentioned as the continuously operated control valves. Both the discharge line and the control valve are discontinuously back-flushed with a flushing gas flow to prevent their clogging.

However, the great disadvantage associated with this type of continuous discharge system is correlated to the excessive amount of gaseous monomers and inert compounds which are continuously discharged from the fluidized bed together with the polymer powder. In fact, the amount of reaction mixture accompanying the polymer is high, being the polymer drawn off from a reaction zone where the solids concentration is quite low. Said considerable amount of reaction monomers cannot be wasted and has to be necessarily recovered by the use of large-sized devices for decompressing and degassing the polymer, and also appropriate and costly devices for recompressing and recycling part of said reaction gas mixture into the polymerization reactor. Higher is the amount of reaction gas mixture to be recovered and recycled to the reactor, higher are the operative costs which are involved.

It is therefore largely felt the need of overcoming the mentioned disadvantages associated with the conventional prior art discharge systems, providing an innovative process for continuously discharging polymer powder from a gas-phase polymerization reactor that can simultaneously reduce the amount of associated gas.

It has now been found a process and apparatus for the gas-phase polymerization of olefins capable of minimizing in a considerable way the amount of gas withdrawn from the polymerization apparatus together with the polymer.

It is therefore a first object of the present invention a gas-phase process for polymerizing one or more α-olefins in a fluidized bed reactor in the presence of a polymerization catalyst, said fluidized bed reactor being equipped with a fluidization grid arrange at its base, and external means for recycling and cooling the unreacted gas from the top of said reactor to said fluidization grid, the process being characterized by:
(i) a continuous pneumatic recycle of polymer by means of a circulation loop connecting said fluidization grid to the upper region of the fluidized bed reactor, said circulation loop comprising a substantially vertical standpipe and a pneumatic conveyor pipe, wherein polymer powder coming from said fluidized bed enters said standpipe forming therein a solid thickening zone;
(ii) a continuous discharge of polymer from said solid thickening zone.

The gas-phase polymerization process of the present invention comprises a continuous pneumatic recycle of polymer particles from a region situated in the bottom portion of the fluidized bed to a region situated in the upper part of the fluidized bed reactor. The technical feature (i) of the present invention is carried out by means of a circulation loop running outside the fluidized bed reactor, said circulation loop comprising a substantially vertical standpipe and a pneumatic conveyor pipe.

The substantially vertical standpipe protrudes downwardly from the distribution grid so that polymer powder coming from the fluidized bed falls due to gravity into said standpipe. A solid thickening zone is formed in this standpipe since the polymer is forced to flow, by gravity, inside a restricted volume: this allows the implementation of the technical feature (ii) of the present invention because said solid thickening zone is characterized by a concentration of solid higher than the solids concentration present inside the fluidized bed reactor.

The polymer powder flows by gravity in said solid thickening zone and this continuous flow prevents from the formation of "hot spots" in the standpipe of the circulation loop. A discharge valve can be advantageously placed in correspondence of said thickening zone for continuously discharging a fraction of polymer powder flowing inside the circulation loop. As a consequence, the amount of gas discharged with the polymer is drastically reduced in comparison with the prior art technique of discharging polymer directly from the fluidized bed of polymer: in fact, in correspondence of said thickening zone the quantity of gas is brought to values close to those of the intergranular gas surrounding the polymer particles in a packed bed condition.

The implementation of the technical feature (ii) of the invention leads to drastic reduction in volumes of unreacted gases to be recovered and a consequent remarkable reduction of operative costs downstream the discharge valve, specifically in the stages of decompressing and degassing the polymer, and in recompressing and recycling the reaction gas mixture to the polymerization apparatus.

As said, the polymer discharge valve is advantageously placed in correspondence of said solid thickening zone and the opening of said valve is continuously adjusted so as to keep constant the height of the fluidized polymer bed inside the reactor. According to the invention, the ratio between the flow rate of polymer continuously recycled to the reactor via the circulation loop and the flow rate of polymer continuously discharged through said discharge valve is comprised between 2 and 20, preferably between 4 and 15.

Downstream the vertical standpipe, the circulation loop of the invention comprises a pneumatic conveyor pipe having the function of reintroducing into the fluidized bed reactor the polymer powder which by-passes the discharge valve: a "thrust" gas is fed at the inlet of said pneumatic conveyor pipe to enable the continuous pneumatic recycle of polymer to the upper region of said fluidized bed reactor. This thrust gas is generally taken from the gas recycle system for recycling the unreacted monomers from the top of the fluidized bed reactor to below the fluidization grid.

At the end of the pneumatic conveyor pipe the polymer powder is reintroduced into the fluidized bed reactor, preferably in a region above the polymer bed and below the velocity reduction zone, if present in the fluidized bed reactor.

In conventional fluidized bed reactors the broad particle size distribution may cause elutriation and segregation effects with bigger particles concentrating more in the lower region of the polymer bed, so that a different particle size distribution can be found at different level of the fluidized bed.

The continuous circulation of solid from the bottom to the upper region of the fluidized bed reactor gives the further advantage of improving the uniformity of the polymer bed.

A best homogeneity in the particle size distribution of the polymer bed is achieved because the solid fraction having a higher average diameter, which would tend to segregate from the bed and accumulate on the gas distribution grid, is advantageously conveyed downwards towards the standpipe, and from there discharged outside the reactor or recycled to the top of the fluidized bed.

Other advantages and features of the present invention are illustrated in the following detailed description with reference to the attached drawing, which is representative and not limitative of the scope of the invention.

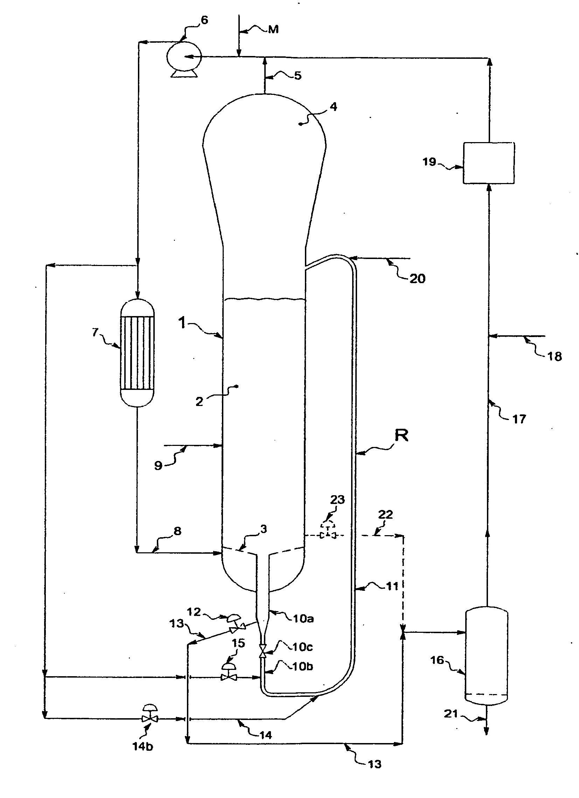

Figure 1 is a fluidized bed reactor having a polymer discharge system according to the process of the present invention.

With reference to Figure 1, a fluidized bed reactor 1 for the continuous polymerization in gas-phase of α-olefins is shown. The reactor 1 comprises a fluidized bed 2 of polymer, a fluidization grid 3 and a velocity reduction zone 4. The velocity reduction zone 4 is generally of increased diameter compared to the diameter of the fluidized bed portion of the reactor. The polymer bed is kept in a fluidization state by an upwardly flow of gas fed through the fluidization grid 3 placed at the bottom portion of the reactor 1.

The gaseous stream leaving the top of the velocity reduction zone 4 comprises, besides the unreacted monomers, also inert condensable gases, such as alkanes, as well as inert non-condensable gases, such as nitrogen. Said gaseous stream is compressed, cooled and recycled to the bottom of the fluidized bed reactor: from the top of the velocity reduction zone 4 the gaseous stream is transferred via recycle line 5 to a compressor 6 and then to a heat exchanger 7. Passing through the heat exchanger 7, the gaseous stream is cooled in order to dissipate the reaction heat and then transferred to the bottom of the fluidized bed reactor (below the gas distribution grid) via line 8. Make-up monomers, molecular weight regulators, and optional inert gases are fed into the reactor 1 via line M. In figure 1 the position of line M is placed, just as an example, upstream the compressor 6, this non limiting the scope of the invention.

Generally, the various catalyst components are fed to the reactor 1 via a line 9 that is preferably placed in the lower part of the fluidized bed 2.

The fluidized bed reactor 1 of the invention is provided with a continuous pneumatic recycle of polymer by means of a circulation loop, indicated with reference R, connecting said fluidization grid 3 to the upper region of the fluidized bed reactor 1.

The circulation loop R comprises a substantially vertical standpipe 10, that may be made of a uniform diameter, or preferably comprises more sections having decreasing diameters in the downward direction. The inlet of the standpipe 10 is connected to the fluidization grid 3 while its lower part is connected to a pneumatic conveyor pipe 11, which has the function of reintroducing the polymer powder into the fluidized bed reactor 1. The outlet of said pneumatic conveyor pipe 11 is preferably placed above the polymer bed 2 and below the velocity reduction zone 4.

The gas distribution grid 3 may be flat, but preferably is endowed with a cone shape in such a way that its downward inclination towards the standpipe 10 fosters the entry of the polymer powder into the standpipe 10 due to gravity. Polymer powder enters the standpipe 10 without the addition of any gas, and gives rise to the formation of a solid thickening zone with a positive pressure gradient. The inlet of the standpipe 10 is preferably located in a central position with respect to the fluidization grid 3, as shown in Fig. 1.

In the standpipe 10 the polymer flows downwards under the action of gravity so that the density of the solid (kg/m³) therein is higher than the density in the fluidized bed 2, said density in the standpipe 10 being close to the bulk density of the polymer.

A control valve 12 is installed in proximity of standpipe 10 for adjusting the flow rate of polymer discharged from the reactor 1 into the discharge conduit 13. Preferably, when the standpipe 10 is formed with decreasing diameters, the control valve 12 is placed in correspondence of a restriction existing between a section of higher diameter 10a and a section of lower diameter 10b as shown in Fig. 1. An on-off safety valve 10c is placed on said restriction, the closure of said valve 10c causing the interruption of the solid recirculation along the circulation loop R.

Segmental ball valves or eccentric rotary type valves can be used as the control valve 12. The discharge of polymer is carried out in continuous and the opening of said control valve 12 is adjusted so as to keep constant the level of solid inside the fluidized bed reactor 1. The solid not discharged through the discharge conduit 13 is recycled to the upper region of the fluidized bed reactor 1 by the circulation loop R.

A "thrust gas" is generally fed via line 14 at the inlet of the pneumatic conveyor pipe 11, said thrust gas being the carrier entraining the solid particles along the conveyor pipe 11. The regulation of the mass flow rate of solid recycled through the circulation loop R can be carried out by means of the control valves 14b and 15, adjusting the flow rate of "thrust gas" entering the conveyor pipe 11. Said thrust gas can advantageously be taken from the gas recycle line at a point downstream the compressor 6 and upstream the heat exchanger 7, thus exploiting the pressure drop existing through the heat exchanger 7, the distribution grid 3 and the polymer bed 2.

The operative pressure in the reactor 1 is maintained at conventional values generally comprised between 10 and 30 bar, the temperature being comprised between 40 and 130°C.

The pressure downstream the control valve 12 is preferably in the range between 0.5 and 3 bar, sufficiently low to stop the polymerization reaction and cause the devolatilization of most of the gas dissolved in the solid. Obviously, the operative conditions downstream the discharge valve 12 cause an instantaneous evaporation (flash) of hydrocarbons dissolved in the polymer powder. The polymer discharged through the control valve 12 is transported via the discharge conduit 13 up to a separation tank 16.

The gas accompanying the polymer discharged through the discharge valve 12 and also the gas released by depressurization are separated from the polymer in the separation tank 16. The separated gas may be recycled to reactor 1 by means of the compressor 19 via line 17. Another introduction point, i.e. line 18, can be placed along line 17 to supply monomers, chain regulators and optionally inert gas.

From the bottom of the separation tank 16 the polymer is recovered and may be conveyed via line 21 to the successive steps of stripping hydrocarbons dissolved in the polymer, deactivation of catalyst residues or, in alternative, to a successive polymerization step. Another advantage achieved from the process of the invention and correlated to the continuous pneumatic recycle of polymer powder to the reactor regards the possibility of feeding liquid monomers and/or catalyst components (for example metal-alkyls) directly into the circulation loop R. This may be carried out, for instance, by means of line 20, advantageously placed in correspondence of the upper portion of the conveyor pipe 11. In. the case of feeding a liquid monomer, an effective dispersion of the latter on the solid particles and its immediate vaporization is obtained, with the consequent advantage of improving the removal of polymerization heat from the polymerization reactor.

Furthermore, with respect to the conventional feeding of make-up monomers at traditional points along the gas recycle line 17, the fouling problems caused by the presence of electrostatic charges do not occur if make-up monomers and/or reaction activators are fed via line 20 to the conveyor pipe 11. This is due to the fact that inside the circulation loop R the electrostatic forces have virtually no influence due to the high momentum of the solid and its cleaning effect on the walls of the loop R.

According to a second embodiment of the invention, the olefin polymerization in the above described process and apparatus can be operated also in the so called "condensing mode".

This technique is generally exploited for increasing the space time yield in a continuous fluidized bed reactor. The recycle gas stream is intentionally cooled to a temperature below its dew point to produce a two-phase mixture under conditions such that the liquid phase of said mixture will remain entrained in the gas phase of said mixture. Said two-phase mixture is introduced into the reactor at a point in the lower region of the reactor, and most preferably at the bottom of the reactor to ensure uniformity of the fluid stream passing upwardly through the fluidized bed. The evaporation of the liquid phase takes place inside the polymerization bed and this ensures a more effective removal of the polymerization heat.

By operating in the "condensing mode", the cooling capacity of the recycle streak is increased by the vaporization of the entrained condensed liquids and also in view of the higher temperature gradient existing between the recycle stream and the reactor.

It is therefore a second object of the present invention a gas-phase process for polymerizing one or more α-olefins in a fluidized bed reactor in the presence of a polymerization catalyst, said fluidized bed reactor being equipped wich a fluidization grid arranged at its base, and external means for recycling and cooling the unreacted gas from the top of said reactor to said fluidization grid, the process being characterized by:
(i) a continuous pneumatic recycle of polymer by means of a circulation loop connecting said fluidization grid to the upper region of the fluidized bed reactor, said circulation loop comprising a substantially vertical standpipe and a pneumatic conveyor pipe, wherein polymer powder coming from said fluidized bed enters said standpipe forming therein a solid thickening zone;
(ii) a continuous discharge of polymer from said solid thickening zone.
(iii) the introduction of a two-phase mixture of gas and liquid under the fluidization grid, said two-phase mixture coming from said external means for recycling and cooling the unreacted gas.

With reference to Fig. 1, the two-phase mixture introduced according to feature (iii) under the fluidization grid 3 of the fluidized bed 2 comprises one or more monomers of formula CH₂=CHR, where R is hydrogen or a hydrocarbon radical having 1-12 carbon atoms and optionally also one or more C₂-C₈ alkanes or cycloalkanes as inert condensable gases.

The condensed liquid moves upwardly through the distribution grid 3, so that its evaporation contributes to provide an improved cooling of the lower region of the fluidized bed 2 and thus of the polymer entering the circulating pipe R of the present invention. This has the beneficial effect of providing a partial cooling of the polymer powder while circulating inside the circulation loop.

All the above described advantages of the present invention can be achieved by using a gas-phase polymerization apparatus, here described in connection with Fig. 1.

It is therefore a further object of the present invention an apparatus for the gas-phase polymerization of olefins in a fluidized bed reactor, said fluidized bed reactor being equipped with a fluidization grid arranged at its base, a gas circulation system, and a device for the continuous discharge of polymer from the reactor, characterized by the fact that said discharge device comprises:
- a pneumatic circulation pipe (R) comprising a substantially vertical standpipe 10 and a pneumatic conveyor pipe 11, said standpipe 10 defining a solid thickening zone in which the concentration of solid is higher than the solid concentration in the polymer bed 2,
- a solid discharge conduit 13 connected to said standpipe 10 by means of a regulation means 12 suitable for adjusting the mass flow rate of polymer discharged from the reactor 1.

The circulation loop R connects the fluidization grid 3 to the upper region of the fluidized bed reactor, preferably to a region above the polymer bed 2 and below the velocity reduction zone 4. The gas distribution grid 3 has preferably a conical shape surrounding the standpipe 10, the inlet of said standpipe 10 being placed at the center of said distribution grid 3.

As regards the average diameter of the circulation loop R, this parameter is generally selected at a value of less than 0.15 D_{R}, where D_{R} is the diameter of the fluidized bed reactor. Above this upper limit, an excessive amount of gas is required to circulate into the loop R, so that a compressor 6 of increased size has to be adopted in the gas recycle line. A suitable range for the diameter of the circulation loop R is from 0.01 to 0.15 D_{R}, preferably from 0,02 to 0,08 D_{R}.

The regulation means 12 for adjusting the amount of discharged polymer comprises a control valve, interposed between the standpipe 10 and the discharge conduit 13.

The standpipe 10 may be made of a uniform diameter, but preferably comprises more sections having decreasing diameters in the downward direction. The control valve 12 is preferably placed in correspondence of a restriction between a section of higher diameter 10a and a section of lower diameter 10b as shown in Fig. 1.

The discharge conduit 13 connects said regulation means 12 to a separation tank 16, wherein the obtained polymer is separated from the gas, which is recycled to the reactor via line 17 and recompression means 19.

The polymerization apparatus of the present invention further comprises:
- one or more lines, such as line 14, for feeding a thrust gas at the inlet of said pneumatic conveyor pipe 11;
- regulation means, such as control valves 14b and 15, for adjusting the flow rate of said thrust gas;
- means 20 for feeding liquid monomers and/or catalyst components directly into said circulation loop R, said means being placed in correspondence of the upper portion of said conveyor pipe 11.

The polymerization process of the invention can be combined with conventional technologies operated in slurry, in bulk, or in a gas-phase, to carry out a sequential multistage polymerization process. Therefore, upstream or downstream the apparatus of the invention, one or more polymerization stages operating in a loop reactor, or in a conventional fluidized bed reactor, or in a stirred bed reactor, can be provided. In particular, gas-phase polymerization reactors having interconnected polymerization zones as described in EP 782 587 and EP 1012195 can be advantageously operated upstream or downstream the apparatus of the present invention.

The gas-phase polymerization process of the invention allows the preparation of a large number of olefin powders having an optimal particle size distribution with a low content of fines. The α-olefins preferably polymerized by the process of the invention have formula CH₂=CHR, where R is hydrogen or a hydrocarbon radical having 1-12 carbon atoms. Examples of polymers that can be obtained are:
- high-density polyethylenes (HDPEs having relative densities higher than 0.940) including ethylene homopolymers and ethylene copolymers with α-olefins having 3 to 12 carbon atoms;
- linear polyethylenes of low density (LLDPEs having relative densities lower than 0.940) and of very low density and ultra low density (VLDPEs and ULDPEs having relative densities lower than 0.920 down to 0.880) consisting of ethylene copolymers with one or more α-olefins having 3 to 12 carbon atoms;
- elastomeric terpolymers of ethylene and propylene with minor proportions of diene or elastomeric copolymers of ethylene and propylene with a content of units derived from ethylene of between about 30 and 70% by weight;
- isotactic polypropylene and crystalline copolymers of propylene and ethylene and/or other α-olefins having a content of units derived from propylene of more than 85% by weight;
- isotactic copolymers of propylene and α-olefins, such as 1-butene, with an α-olefin content of up to 30% by weight;
- impact-resistant propylene polymers obtained by sequential polymerisation of propylene and mixtures of propylene with ethylene containing up to 30% by weight of ethylene;
- atactic polypropylene and amorphous copolymers of propylene and ethylene and/or other α-olefins containing more than 70% by weight of units derived from propylene.

The gas-phase polymerization process herewith described is not restricted to the use of any particular family of polymerization catalysts. The invention is useful in any exothermic polymerization reaction employing any catalyst, whether it is supported or unsupported, and regardless of whether it is in pre-polymerized form.

The polymerization reaction can be carried out in the presence of highly active catalytic systems, such as Ziegler-Natta catalysts, single site catalysts, chromium-based catalysts, vanadium-based catalysts.

A Ziegler-Natta catalyst system comprises the catalysts obtained by the reaction of a transition metal compound of groups 4 to 10 of the Periodic Table of Elements (new notation) with an organometallic compound of group 1, 2, or 13 of the Periodic Table of element.

In particular, the transition metal compound can be selected among compounds of Ti, V, Zr, Cr, and Hf. Preferred compounds are those of formula Ti(OR)ₙX_{y-n} in which n is comprised between 0 and y; y is the valence of titanium; X is halogen and R is a hydrocarbon group having 1-10 carbon atoms or a COR group. Among them, particularly preferred are titanium compounds having at least one Ti-halogen bond such as titanium tetrahalides or halogenalcoholates. Preferred specific titanium compounds are TiCl₃, TiCl₄, Ti(OBu)₄, Ti(OBu)Cl₃, Ti(OBu)₂Cl₂, Ti(OBu)₃Cl.

Preferred organometallic compounds are the organo-Al compounds and in particular Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as AlEt₂Cl and Al₂Et₃Cl₃ optionally in mixture with said trialkyl aluminum compounds. Particularly suitable high yield ZN catalysts are those wherein the titanium compound is supported on magnesium halide in active form which is preferably MgCl₂ in active form. Particularly for the preparation crystalline polymers of CH₂CHR olefins, where R is a C1 C10 hydrocarbon group, internal electron donor compounds can be supported on the MgCl₂. Typically, they can be selected among esters, ethers, amines, and ketones. In particular, the use of compounds belonging to 1,3-diethers, cyclic ethers, phthalates, benzoates, acetates and succinates is preferred.

When it is desired to obtain a highly isotactic crystalline polypropylene, it is advisable to use, besides the electron-donor present in the solid catalytic component, an external electron-donor (ED) added to the aluminium alkyl co-catalyst component or to the polymerization reactor. These external electron donors can be selected among alcohols, glycols, esters, ketones, amines, amides, nitriles, alkoxysilanes and ethers. The electron donor compounds (ED) can be used alone or in mixture with each other. Preferably the ED compound is selected among aliphatic ethers, esters and alkoxysilanes. Preferred ethers are the C2-C20 aliphatic ethers and in particular the cyclic ethers preferably having 3-5 carbon atoms, such as tetrahydrofurane (THF), dioxane.

Preferred esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate.

The preferred alkoxysilanes are of formula Ra¹R_{b}²Si(OR³)_{c}, where a and b are integer from 0 to 2, c is an integer from 1 to 3 and the sum (a+b+c) is 4; R¹, R², and R³, are alkyl, cycloalkyl or aryl radicals with 1-18 carbon atoms. Particularly preferred are the silicon compounds in which a is 1, b is 1, c is 2, at least one of R¹ and R² is selected from branched alkyl, cycloalkyl or aryl groups with 3-10 carbon atoms and R³ is a C₁-C₁₀ alkyl group, in particular methyl. Other useful catalysts are the vanadium-based catalysts, which comprise the reaction product of a vanadium compound with an aluminum compound, optionally in the presence of a halogenated organic compound. Optionally the vanadium compound can be supported on an inorganic carrier, such as silica, alumina, magnesium chloride. Suitable vanadium compounds are VCl₄, VCl₃, VOCl₃, vanadium acetyl acetonate.

Other useful catalysts are those based on chromium compounds, such as chromium oxide on silica, also known as Phillips catalysts.

Other useful catalysts are single site catalysts, for instance metallocene-based catalyst systems which comprise:
at least a transition metal compound containing at least one n bond;
at least an alumoxane or a compound able to form an alkylmetallocene cation; and optionally an organo-aluminum compound.

A preferred class of metal compounds containing at least one n bond are metallocene compounds belonging to the following formula (I):

Cp(L)_{q}AMXₚ (I)

wherein M is a transition metal belonging to group 4, 5 or to the lanthanide or actinide groups of the Periodic Table of the Elements; preferably M is zirconium, titanium or hafnium;
the substituents X, equal to or different from each other, are monoanionic sigma ligands selected from the group consisting of hydrogen, halogen, R⁶, OR⁶, OCOR⁶, SR⁶, NR⁶₂ and PR⁶₂, wherein R⁶ is a hydrocarbon radical containing from 1 to 40 carbon atoms; preferably, the substituents X are selected from the group consisting of -Cl, -Br, -Me, -Et, -n-Bu, -sec-Bu, -Ph, -Bz, -CH₂SiMe₃, -OEt, -OPr, -OBu, -OBz and -NMe₂;
p is an integer equal to the oxidation state of the metal M minus 2;
n is 0 or 1; when n is 0 the bridge L is not present;
L is a divalent hydrocarbon moiety containing from 1 to 40 carbon atoms, optionally containing up to 5 silicon atoms, bridging Cp and A, preferably L is a divalent group (ZR⁷₂)ₙ; Z being C, Si, and the R⁷ groups, equal to or different from each other, being hydrogen or a hydrocarbon radical containing from 1 to 40 carbon atoms;
more preferably L is selected from Si(CH₃)₂, SiPh₂, SiPhMe, SiMe(SiMe₃), CH₂, (CH₂)₂, (CH₂)₃ or C(CH₃)₂;
Cp is a substituted or unsubstituted cyclopentadienyl group, optionally condensed to one or more substituted or unsubstituted, saturated, unsaturated or aromatic rings;

A has the same meaning of Cp or it is a NR⁷, -O, S, moiety wherein R⁷ is a hydrocarbon radical containing from 1 to 40 carbon atoms;
Alumoxanes used as component b) are considered to be linear, branched or cyclic compounds containing at least one group of the type: 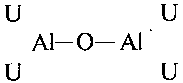 wherein the substituents U, same or different, are defined above.

In particular, alumoxanes of the formula: 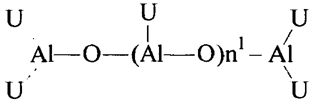 can be used in the case of linear compounds, wherein n¹ is 0 or an integer of from 1 to 40 and where the U substituents, same or different, are hydrogen atoms, halogen atoms, C₁-C₂₀-alkyl, C₃-C₂₀-cyclalkyl, C₆-C₂₀-aryl, C₇-C₁₀-alkylaryl or C₇-C₁₀-arylalkyl radicals, optionally containing silicon or germanium atoms, with the proviso that at least one U is different from halogen, and j ranges from 0 to 1, being also a non-integer number; or alumoxanes of the formula: 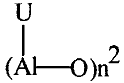 can be used in the case of cyclic compounds, wherein n² is an integer from 2 to 40 and the U substituents are defined as above.

The catalyst may suitably be employed in the form of a pre-polymer powder prepared beforehand during a pre-polymerization stage with the aid of a catalyst as described above. The pre-polymerization may be carried out by any suitable process, for example, polymerization in a liquid hydrocarbon diluent or in the gas phase using a batch process, a semi-continuous process or a continuous process.

The following examples will further illustrate the present invention without limiting its scope.

### EXAMPLES

### Reactor Setup

A fluidized bed reactor having the configuration shown in Fig. 1 was used to carry out the olefin polymerization according to the process of the invention.

The design parameters of the fluidized bed reactor are the following:
Diameter of the reactor = 2.4 m
Diameter of the circulation loop R = 0.2 m

Conical shape of the fluidization grid with a bottom apex.

The circulation pipe R comprises a substantially vertical standpipe 10 and a pneumatic conveyor pipe 11, the inlet of said standpipe 10 is placed in correspondence of the center of the distribution grid 3. The vertical standpipe 10 is formed by two sections decreasing in diameter 10a and 10b, of 0.35 m and 0.2 m, respectively. The height of section 10a is of 0.6 m, while the height of section 10b is of 2.0 m

The control valve 12 for discharging the polymer is placed in correspondence of the restriction between the sections 10a and 10b as shown in Fig. 1.

### Example 1

### Preparation of the solid catalyst component

The polymerization was carried out in the presence of a Ziegler-Natta catalyst comprising a solid catalyst component prepared with the procedure described in EP 541760 on page 7, lines 1-16.

Triethylaluminium (TEAL) as a cocatalyst, and methylcyclohexyldimethoxysilane as an electron donor, were contacted with the above solid catalyst component according to the teaching given in Example 1 of EP 541760, lines 25-29. The molar ratio TEAL/Ti is of 100.

### Polymerization conditions

The above catalyst, prepolymerized with propylene, was fed via line 9 to the fluidized bed reactor of Fig. 1, where ethylene was polymerized using H₂ as molecular weight regulator and in the presence of propane as an inert diluent.

Make-up propane, ethylene and hydrogen were fed via line M to the gas recycle line 17.
Polymerization conditions: T = 80°C, p =24 bar

The following gas composition is maintained inside the reactor:

| | |
|---|---|
| **Ethylene** | **50% mol** |
| **Hydrogen** | **15% mol** |
| **Propane** | **35% mol** |

About 600 m³/h of a gaseous mixture coming from the gas recycle line, taken from a point upstream the heat exchanger 7, were continuously introduced by means of line 14 into the circulation loop R: this "thrust gas" ensures the continuous transport of solid along the circulation loop R up to the upper region of the fluidized bed reactor. Moreover, about 15 m³/h of "thrust gas" were continuously fed to the circulation loop R via the control valve 15: the flow rate of recycled solid was 40 t/h.

Polyethylene powder was continuously discharged from the fluidized bed reactor via the control valve 12, always maintaining the control valve 23 on line 22 completely closed. The opening of the control valve 12 was adjusted so as to keep constant the level of solid inside the fluidized bed reactor.

The separator tank 16 was kept at a pressure of 0.5 bar: the pressure downstream the discharge valve 12 was of about 2 bar, so as to stop the polymerization reaction and also to cause a partial devolatilization of the gas dissolved into the solid particles.

About 5 t/h of polyethylene were continuously discharged via the control valve 12: the weight ratio between the recycled polymer (loop R) and the discharged polymer was 8. The total amount of gas discharged with the solid, measured at the top of the separator tank 16, was equal to 300 Nm³/h (0°C, 1 bar).

Running was followed for several days, with regular runs, allowing the production of polyethylene for commercial use. Polyethylene granules of spherical shape having an average diameter of 1.6 mm were obtained.

### Example 2 (comparative)

Ethylene was polymerized in the presence of the same catalyst components of example 1, and maintaining the same operative conditions as described in example 1 inside the reactor (monomer concentration, temperature, pressure).

Differently from example 1, the polymer particles were continuously discharged from the reactor according to the prior art technique of using a discharge valve, placed in the bottom region of polymer fluidized bed. Therefore, during the polymerization run the control valve 12 and the valve 10c were maintained completely closed, so as to stop the continuous recycle of solid in the loop R and also the polymer discharge from the loop R.

The control valve 23 was kept open, so as to discharge polymer via line 22 into the separation tank 16. The opening of control valve 23 is adjusted so as to keep constant the level of solid inside the fluidized bed reactor.

The separator tank 16 was kept at a pressure of 0.5 bar: the pressure downstream the discharge valve 23 was of about 2 bar, so as to stop the polymerization reaction and also to cause a partial devolatilization of the gas dissolved into the solid particles.

Polyethylene granules of spherical shape having an average diameter of about 1.6 mm were obtained.

About 4.8 t/h of polyethylene were continuously discharged via line 22 into the separation tank 16. The total amount of gas discharged with the solid, measured at the top of the separator tank 16, was equal to 387 Nm³/h.

The comparison with Example 1 demonstrates that the process and polymerization apparatus of the invention is able to lead to a remarkable reduction in volumes of unreacted gases (monomer and inert components) to be recovered and recycled to the reactor. This implies a remarkable reduction of operative costs in the stages of decompressing and degassing the polymer, recompressing and recycling the reaction gas mixture to the polymerization apparatus.

### Example 3

### Preparation of the solid catalyst component

The polymerization was carried out in the presence of a Ziegler-Natta catalyst system comprising:
- a titanium solid catalyst component prepared with the procedure described in EP 395 083, Example 3, according to which diisobutyl phthalate is used the internal donor compound.
- triethylaluminium (TEAL) as the cocatalyst;
- dicyclopentyldimethoxysilane (DCPMS) as the external donor.

The above components were pre-contacted at a temperature of 25°C for 10 minutes in a pre-contacting vessel, the weight ratio TEAL/sol.cat being of 5, the weight ratio TEAL/DCPMS being of 5.

### Polymerization conditions

The above catalyst, prepolymerized with propylene, was fed via line 9 to the fluidized bed reactor of Fig. 1, where propylene was polymerized using H₂ as molecular weight regulator and in the presence of propane as an inert diluent.

Make-up propane, propylene and hydrogen were fed via line M to the gas recycle line 17.
Polymerization conditions: T = 80°C, p = 20 bar

The following gas composition is maintained inside the reactor:

| | |
|---|---|
| **Propylene** | **54.8% mol** |
| **Propane** | **45.0% mol** |
| **Hydrogen** | **0.2% mol** |

About 750 m³/h of a gaseous mixture coming from the gas recycle line, taken from a point upstream the heat exchanger 7, were continuously introduced by means of line 14 into the circulation loop R: this "thrust gas" ensures the continuous transport of solid along the circulation loop R up to the upper region of the fluidized bed reactor. Moreover, about 20 m³/h of "thrust gas" were continuously fed to the circulation loop R via the control valve 15: the flow rate of recycled solid was 70 t/h.

Polypropylene powder was continuously discharged from the fluidized bed reactor via the control valve 12, always maintaining the control valve 23 on line 22 completely closed. The opening of the control valve 12 was adjusted so as to keep constant the level of solid inside the fluidized bed reactor.

The separator tank 16 was kept at a pressure of 0.5 bar: the pressure downstream the discharge valve 12 was of about 2 bar, so as to stop the polymerization reaction and also to cause a partial devolatilization of the gas dissolved into the solid particles.

About 6 t/h of polypropylene were continuously discharged via the control valve 12 with a weight ratio between the recycled polymer (loop R) and the discharged polymer of 11.7. The total amount of gas discharged with the solid, measured at the top of the separator tank 16, was of 235 Nm³/h.

Running was followed for several days, with regular runs, allowing the production of polypropylene for commercial use. Polypropylene granules of spherical shape having an average diameter of 2.0 mm were obtained.

### Example 4 (comparative)

Propylene was polymerized in the presence of the same catalyst components of example 3, and maintaining the same operative conditions as described in example 3 inside the fluidized bed reactor (monomer concentration, temperature, pressure).

Differently from example 3, the polymer particles were continuously discharged from the reactor according to the prior art technique of using a discharge valve, placed in the bottom region of polymer fluidized bed. Therefore, during the polymerization run the control valve 12 and the valve 10c were maintained completely closed, so as to stop the continuous recycle of solid in the loop R and also the polymer discharge from the loop R.

The control valve 23 was kept open, so as to discharge polymer via line 22 into the separation tank 16. The opening of control valve 23 is adjusted so as to keep constant the level of solid inside the fluidized bed reactor.

The separator tank 16 was kept at a pressure of 0.5 bar: the pressure downstream the discharge valve 23 was of about 2 bar, so as to stop the polymerization reaction and also to cause a partial devolatilization of the gas dissolved into the solid particles.

Polypropylene granules of spherical shape having an average diameter of about 2.0 mm were obtained. About 5.7 t/h of polypropylene were continuously discharged via line 22 into the separation tank 16. The total amount of gas discharged with the solid, measured at the top of the separator tank 16, was equal to 420 Nm³/h.

The comparison with Example 3 demonstrates that the process and polymerization apparatus of the invention is able to lead to a remarkable reduction in volumes of unreacted gases (monomer and inert components) to be recovered and recycled to the reactor.

## Claims

1. A gas-phase process for polymerizing one or more α-olefins in a fluidized bed reactor in the presence of a polymerization catalyst, said fluidized bed reactor being equipped with a fluidization grid arranged at its base, and external means for recycling and cooling the unreacted gas from the top of said reactor to said fluidization grid, the process being **characterized by**:
(i) a continuous pneumatic recycle of polymer by means of a circulation loop connecting said fluidization grid to the upper region of the fluidized bed reactor, said circulation loop comprising a substantially vertical standpipe and a pneumatic conveyor pipe, wherein polymer powder coming from said fluidized bed enters said standpipe forming therein a solid thickening zone;
(ii) a continuous discharge of polymer from said solid thickening zone.

2. The process according to claim 1, wherein a discharge valve is placed in correspondence of said solid thickening zone for continuously discharging a fraction of said polymer powder.

3. The process according to claims 1 and 2, wherein the ratio between the flow rate of polymer continuously recycled to the reactor via said circulation loop and the flow rate of polymer continuously discharged through said discharge valve is comprised between 2 and 20.

4. The process according to claim 2, wherein the discharge of polymer is carried out in continuous and the opening of said discharge valve is adjusted so as to keep constant the level of solid inside the fluidized bed reactor.

5. The process according to claims 1-4, wherein the polymer powder by-passing said discharge valve enters said pneumatic conveyor pipe.

6. The process according to claim 1, wherein a thrust gas is fed at the inlet of said pneumatic conveyor pipe to enable the continuous pneumatic recycle of polymer,

7. The process according to claim 6, wherein said thrust gas is taken from the external means for recycling the unreacted gas from the top of the reactor to the fluidization grid.

8. The process according to claim 1, wherein after flowing in said pneumatic conveyor pipe the polymer powder is reintroduced into the fluidized bed reactor above the polymer bed and below the velocity reduction zone.

9. The process according to claim 1, wherein liquid monomers and/or catalyst components are fed into said circulation loop.

10. The process according to claim 1, wherein said polymerization catalyst is selected from Ziegler-Natta catalysts, single site catalysts, chromium-based catalysts and vanadium-based catalysts.

11. An apparatus for the gas-phase polymerization of olefins in a fluidized bed reactor, said fluidized bed reactor being equipped with a fluidization grid arranged at its base, a gas circulation system, and a device for the continuous discharge of polymer from the reactor, the apparatus being **characterized in that** said discharge device comprises:
- a pneumatic circulation pipe comprising a substantially vertical standpipe and a pneumatic conveyor pipe, said standpipe connecting said fluidization grid to the upper region of said fluidized bed reactor;
- a solid discharge conduit connected to said standpipe by means of a regulation means suitable for adjusting the mass flow rate of polymer discharged from the reactor.

12. The apparatus according to claim 11, wherein said distribution grid has a conical shape surrounding said standpipe, the inlet of said standpipe being placed at the center of said distribution grid.

13. The apparatus according to claim 11, wherein the average diameter of said circulation loop is comprised from 0.01 to 0.15 D_{R}, wherein D_{R} is the diameter of the fluidized bed reactor.

14. The apparatus according to claim 11, wherein said regulation means comprises a control valve interposed between said standpipe and said discharge conduit.

15. The apparatus according to claim 11, wherein said standpipe comprises more sections having decreasing diameters in the downward direction.

16. The apparatus according to claims 11 and 15, wherein said regulation means is placed on said standpipe in correspondence of a restriction between a section of higher diameter and a section of lower diameter.

17. The apparatus according to claim 11, wherein said discharge conduit connects said regulation means to a separation tank for separating the obtained polymer from the gas.

18. The apparatus according to claim 11, comprising one or more lines for feeding a thrust gas at the inlet of said pneumatic conveyor pipe.

19. The apparatus according to claim 18, comprising regulation means for adjusting the flow rate of said thrust gas.

20. The apparatus according to claim 11, comprising means for feeding liquid monomers and/or catalyst components into said circulation loop.

## Patentansprüche

1. Gasphasenverfahren für die Polymerisation von einem oder mehreren α-Olefinen in einem Wirbelschichtreaktor in Gegenwart eines Polymerisationskatalysators, wobei der Wirbelschichtreaktor mit einem an seinem Boden angeordneten Fluidisierungsrost ausgestattet ist sowie mit externen Mitteln zum Kühlen und Rückführen des nicht umgesetzten Gases vom oberen Bereich des Reaktors zu dem Fluidisierungsrost, wobei das Verfahren **gekennzeichnet ist durch**:
(i) eine kontinuierliche pneumatische Rückführung von Polymer mit Hilfe einer Zirkulationsschleife, die den Fluidisierungsrost mit dem oberen Bereich des Wirbelschichtreaktors verbindet, wobei die Zirkulationsschleife ein im Wesentlichen vertikales Standrohr und ein pneumatisches Förderrohr umfasst, wobei von der Wirbelschicht kommendes Polymerpulver in das Standrohr eintritt und darin eine Zone verdickter Feststoffe bildet;
(ii) eine kontinuierliche Ausleitung von Polymer aus der Zone verdickter Feststoffe.

2. Verfahren nach Anspruch 1, wobei ein Auslassventil in Verbindung mit der Zone verdickter Feststoffe angeordnet ist, um einen Teil des Polymerpulvers kontinuierlich auszuleiten.

3. Verfahren nach Anspruch 1 und 2, wobei das Verhältnis zwischen der Strömungsgeschwindigkeit des über die Zirkulationsschleife kontinuierlich zu dem Reaktor zurückgeführten Polymers und der Strömungsgeschwindigkeit des kontinuierlich durch das Auslassventil ausgeleiteten Polymers zwischen 2 und 20 liegt.

4. Verfahren nach Anspruch 2, wobei die Ausleitung von Polymer kontinuierlich durchgeführt wird und das Öffnen des Auslassventils so eingestellt wird, dass der Feststoffpegel in dem Wirbelschichtreaktor konstant gehalten wird.

5. Verfahren nach Anspruch 1-4, wobei das an dem Auslassventil vorbeifließende Polymerpulver in das pneumatische Förderrohr eintritt.

6. Verfahren nach Anspruch 1, wobei ein Druckgas am Einlass des pneumatischen Förderrohres eingespeist wird, um die kontinuierliche pneumatische Rückführung von Polymer zu ermöglichen.

7. Verfahren nach Anspruch 6, wobei das Druckgas aus den externen Mitteln zum Rückführen des nicht umgesetzten Gases vom oberen Bereich des Reaktors zu dem Fluidisierungsrost stammt.

8. Verfahren nach Anspruch 1, wobei das Polymerpulver nach Durchströmen des pneumatischen Förderrohres oberhalb des Polymerbetts und unterhalb der Geschwindigkeitsreduktionszone wieder in den Wirbelschichtreaktor eingeleitet wird.

9. Verfahren nach Anspruch 1, wobei flüssige Monomere und/oder Katalysatorkomponenten in die Zirkulationsschleife eingespeist werden.

10. Verfahren nach Anspruch 1, wobei der Polymerisationskatalysator aus Ziegler-Natta-Katalysatoren, Single-Site-Katalysatoren, chrombasierten Katalysatoren und vanadiumbasierten Katalysatoren ausgewählt wird.

11. Vorrichtung für die Gasphasenpolymerisation von Olefinen in einem Wirbelschichtreaktor, wobei der Wirbelschichtreaktor mit einem an seinem Boden angeordneten Fluidisierungsrost, einem Gaszirkulationssystem und einer Vorrichtung zum kontinuierlichen Ausleiten von Polymer aus dem Reaktor ausgestattet ist, wobei die Vorrichtung **dadurch gekennzeichnet ist, dass** die Ausleitungsvorrichtung Folgendes umfasst:
- ein pneumatisches Zirkulationsrohr, das ein im Wesentlichen vertikales Standrohr und ein pneumatisches Förderrohr umfasst, wobei das Standrohr den Fluidisierungsrost mit dem oberen Bereich des Wirbelschichtreaktors verbindet;
- eine Feststoff-Auslassleitung, die mit dem Standrohr über eine Regulierungseinrichtung verbunden ist, die geeignet ist, den Massenstrom von aus dem Reaktor ausgeleitetem Polymer zu regulieren.

12. Vorrichtung nach Anspruch 11, wobei der Verteilungsrost eine das Standrohr umgebende konische Form besitzt und der Einlass des Standrohrs sich in der Mitte des Verteilungsrostes befindet.

13. Vorrichtung nach Anspruch 11, wobei der durchschnittliche Durchmesser der Zirkulationsschleife im Bereich zwischen 0,01 und 0,15 D_{R} liegt, wobei D_{R} der Durchmesser des Wirbelschichtreaktors ist.

14. Vorrichtung nach Anspruch 11, wobei das Regulierungsmittel ein zwischen dem Standrohr und der Auslassleitung angeordnetes Regelventil umfasst.

15. Vorrichtung nach Anspruch 11, wobei das Standrohr mehrere Abschnitte mit in Richtung nach unten abnehmendem Durchmesser umfasst.

16. Vorrichtung nach Anspruch 11 und 15, wobei das Regulierungsmittel an dem Standrohr in Verbindung mit einer Verengung zwischen einem Abschnitt mit größerem Durchmesser und einem Abschnitt mit kleinerem Durchmesser angeordnet ist.

17. Vorrichtung nach Anspruch 11, wobei die Auslassleitung das Regulierungsmittel mit einem Trennbehälter verbindet, um das erhaltene Polymer von dem Gas zu trennen.

18. Vorrichtung nach Anspruch 11, umfassend eine oder mehrere Leitungen zum Einspeisen eines Druckgases am Einlass des pneumatischen Förderrohres.

19. Vorrichtung nach Anspruch 18, umfassend Regulierungsmittel zum Regulieren der Strömungsgeschwindigkeit des Druckgases.

20. Vorrichtung nach Anspruch 11, umfassend Mittel zum Einspeisen flüssiger Monomere und/oder Katalysatorkomponenten in die Zirkulationsschleife.

## Revendications

1. Procédé en phase gazeuse de polymérisation d'une ou plusieurs α-oléfines dans un réacteur à lit fluidisé en présence d'un catalyseur de polymérisation, ledit réacteur à lit fluidisé étant équipé d'une grille de fluidisation agencée à sa base et de moyens externes de recyclage et de refroidissement du gaz qui n'a pas réagi depuis le sommet dudit réacteur jusqu'à ladite grille de fluidisation, le procédé étant **caractérisé par** :
(i) un recyclage pneumatique continu du polymère au moyen d'une boucle de circulation connectant ladite grille de fluidisation à la région supérieure du réacteur à lit fluidisé, ladite boucle de circulation comprenant une colonne montante sensiblement verticale et un tuyau transporteur pneumatique, de la poudre polymère venant du lit fluidisé entrant dans ladite colonne montante en y formant une zone d'épaississement solide ;
(ii) une évacuation continue de polymère depuis ladite zone d'épaississement solide.

2. Procédé selon la revendication 1, une soupape d'évacuation étant placée en correspondance avec ladite zone d'épaississement solide pour évacuer en continu une fraction de ladite poudre polymère.

3. Procédé selon les revendications 1 et 2, le rapport entre le débit du polymère recyclé en continu dans le réacteur via ladite boucle de circulation et le débit de polymère évacué en continu par ladite soupape d'évacuation étant compris entre 2 et 20.

4. Procédé selon la revendication 2, l'évacuation du polymère étant réalisée en continu et l'ouverture de ladite soupape d'évacuation étant ajustée de manière à conserver un niveau constant de solides à l'intérieur du réacteur à lit fluidisé.

5. Procédé selon les revendications 1-4, la poudre polymère contournant ladite soupape d'évacuation entrant dans ledit tuyau transporteur pneumatique.

6. Procédé selon la revendication 1, un gaz de poussée étant alimenté à l'entrée dudit tuyau transporteur pneumatique pour permettre le recyclage pneumatique continu du polymère.

7. Procédé selon la revendication 6, ledit gaz de poussée provenant des moyens externes pour le recyclage du gaz qui n'a pas réagi depuis le sommet du réacteur jusqu'à la grille de fluidisation.

8. Procédé selon la revendication 1, la poudre polymère étant réintroduite dans le réacteur à lit fluidisé au-dessous du lit de polymère et sous la zone de réduction de la vitesse, après s'être écoulé dans ledit tuyau transporteur pneumatique.

9. Procédé selon la revendication 1, des monomères liquides et/ou des composants catalytiques étant alimentés dans ladite boucle de circulation.

10. Procédé selon la revendication 1, ledit catalyseur de polymérisation étant choisi parmi les catalyseurs de Ziegler-Natta, les catalyseurs à site unique, les catalyseurs à base de chrome et les catalyseurs à base de vanadium.

11. Appareil de polymérisation en phase gazeuse d'oléfines dans un réacteur à lit fluidisé, ledit réacteur à lit fluidisé étant équipé d'une grille de fluidisation agencée à sa base, d'un système de circulation de gaz et d'un dispositif d'évacuation continue de polymère depuis le réacteur, l'appareil étant **caractérisé en ce que** ledit dispositif d'évacuation comprend :
- un tuyau de circulation pneumatique comprenant une colonne montante sensiblement verticale et un tuyau transporteur pneumatique, ladite colonne montante connectant ladite grille de fluidisation à la région supérieure dudit réacteur à lit fluidisé ;
- une conduite d'évacuation de solides connectée à ladite colonne montante au moyen d'un moyen de régulation approprié pour ajuster le débit massique de polymère évacué depuis le réacteur.

12. Appareil selon la revendication 11, ladite grille de distribution présentant une forme conique entourant ladite colonne montante, l'entrée de ladite colonne montante étant placée au centre de ladite grille de distribution.

13. Appareil selon la revendication 11, le diamètre moyen de ladite boucle de circulation étant compris de 0,01 à 0,15 D_{R}, D_{R} étant le diamètre du réacteur à lit fluidisé.

14. Appareil selon la revendication 11, ledit moyen de régulation comprenant une soupape de réglage interposée entre ladite colonne montante et ladite conduite d'évacuation.

15. Appareil selon la revendication 11, ladite colonne montante comprenant plusieurs sections présentant de diamètres décroissants vers le bas.

16. Appareil selon les revendications 11 et 15, ledit moyen de régulation étant placé sur ladite colonne montante en correspondance d'un rétrécissement entre une section de diamètre supérieur et une section de diamètre inférieur.

17. Appareil selon la revendication 11, ladite conduite d'évacuation connectant ledit moyen de régulation à un récipient de séparation destiné à séparer le polymère obtenu du gaz.

18. Appareil selon la revendication 11, comprenant une ou plusieurs conduites destinées à alimenter un gaz de poussée à l'entrée dudit tuyau transporteur pneumatique.

19. Appareil selon la revendication 18, comprenant des moyens de régulation pour ajuster le débit dudit gaz de poussée.

20. Appareil selon la revendication 11, comprenant des moyens d'alimentation de monomères liquides et/ou des composants catalytiques dans ladite boucle de circulation.
